# EUROPEAN PATENT APPLICATION

(11) **EP 4 783 700 A1**
(43) Date of publication of application: **29.07.2026**
(21) Application number: 24884215.5
(22) Date of filing: 02.09.2024
(51) Int. Cl.: H04W 72/20

(54) **COMMUNICATION METHOD AND APPARATUS**

(30) Priority: 30.10.2023 CN 202311424899
(71) Applicant: HUAWEI TECHNOLOGIES CO., LTD., Shenzhen, Guangdong 518129 (CN)
(72) Inventor: KUANG, Yiru, Shenzhen, Guangdong 518129 (CN); XU, Haibo, Shenzhen, Guangdong 518129 (CN); HAN, Feng, Shenzhen, Guangdong 518129 (CN)
(74) Representative: Gill Jennings & Every LLP
(86) International application number: PCT/CN2024/116205
(87) International publication number: WO 2025/092208

(57) **Abstract**

A communication method and apparatus are provided. The communication method includes: A first network device sends first information to a second network device, where the first information indicates a candidate band and/or a candidate band combination, and the candidate band and/or the candidate band combination are/is used by a terminal device to report a restricted capability; or the first network device sends second information to the second network device, where the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers. According to the solution of this application, the network device can understand specific content of the temporary capability of the terminal device, so as to correctly configure or schedule the terminal device with the restricted capability.

## Description

This application claims priority to Chinese Patent Application No. 202311424899.5, filed with the China National Intellectual Property Administration on October 30, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In mobile communication systems, if a terminal device UE' capability is temporarily a restricted UE capability, upon entering a connected state, the UE enabled with the temporary capability restriction mechanism may report the specific restricted UE capability by sending a UE assistance information (UE assistance information, UAI) message to a network device, to indicate that the capability of the terminal device is updated to the temporary capability. However, the existing mechanism cannot make the network device understand specific content of the temporary capability, and cannot correctly configure or schedule the terminal device based on the temporary capability.

Therefore, how the network device correctly configures or schedules the terminal device with the restricted capability is an urgent problem to be resolved.

### SUMMARY

This application provides a communication method and apparatus. In different scenarios, filter information is indicated to a distributed network device DU or a secondary node SN. Based on the filter information and a restricted capability reported by a terminal device, the network device can understand specific content of the temporary capability of the terminal device, to correctly configure or schedule the terminal device with the restricted capability.

According to a first aspect, a communication method is provided. The method may be performed by a network device, may be performed by a module (for example, a processor, a chip, or a chip system) used in the network device, or may be implemented by a logical node, a logical module, or software that can implement all or some functions of the network device. The network device may be an access network device. For example, the network device may include a central unit CU and a distributed unit DU, or the network device may be a master node MN and a secondary node SN.

The method includes: A first network device sends first information to a second network device, where the first information indicates a candidate band and/or a candidate band combination, and the candidate band and/or the candidate band combination are/is used by a terminal device to report a restricted capability; or the first network device sends second information to the second network device, where the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers.

In this application, that the candidate band and/or the candidate band combination are/is used by the terminal device to report the restricted capability may be understood as that the terminal device reports the restricted capability based on the candidate band and/or the candidate band combination.

According to the solution of this application, filter information is indicated to a distributed network device DU or a secondary node SN, so that the network device can understand specific content of a temporary capability of a terminal device, so as to correctly configure or schedule the terminal device with the restricted capability.

In a possible implementation, the first information indicates the terminal device to report a restricted terminal device capability.

In a possible implementation, the first information indicates the terminal device to report a range of a restricted terminal device capability.

In a possible implementation, the first information indicates the terminal device to report a candidate band or a candidate band combination of a restricted terminal device capability.

With reference to the first aspect, in some implementations of the first aspect, the method further includes: The first network device sends third information to the terminal device, where the third information indicates that the terminal device is allowed to report the restricted capability; and the first network device receives the restricted capability sent by the terminal device, where the restricted capability is determined by the terminal device based on the third information.

With reference to the first aspect, in some implementations of the first aspect, the first information includes one or more candidate bands, or the first information includes one or more candidate band combinations.

With reference to the first aspect, in some implementations of the first aspect, the second information includes one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

With reference to the first aspect, in some implementations of the first aspect, the restricted capability includes at least one of the following: a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

With reference to the first aspect, in some implementations of the first aspect, the first network device is a central unit, and the second network device is a distributed unit; or the first network device is a master node, and the second network device is a secondary node.

With reference to the first aspect, in some implementations of the first aspect, the first network device is a central unit, the second network device is a distributed unit, and the first information or the second information is carried in a UE context modification request UE CONTEXT MODIFICATION REQUEST message, or the first information or the second information is carried in a UE context setup request UE CONTEXT SETUP REQUEST message.

With reference to the first aspect, in some implementations of the first aspect, the first network device is a master node, the second network device is a secondary node, and the first information or the second information is carried in a cell group configuration information CG-ConfigInfo message.

According to a second aspect, a communication method is provided. The method may be performed by a network device, may be performed by a module (for example, a processor, a chip, or a chip system) used in the network device, or may be implemented by a logical node, a logical module, or software that can implement all or some functions of the network device. The network device may be an access network device. For example, the network device may include a central unit CU and a distributed unit DU, or the network device may be a master node MN and a secondary node SN.

The method includes: A second network device receives first information sent by a first network device, where the first information indicates a candidate band and/or a candidate band combination, and the candidate band and/or the candidate band combination are/is used by a terminal device to report a restricted capability; or the second network device receives second information sent by the first network device, where the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers.

With reference to the second aspect, in some implementations of the second aspect, the first information includes one or more candidate bands, or the first information includes one or more candidate band combinations.

With reference to the second aspect, in some implementations of the second aspect, the second information includes one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

With reference to the second aspect, in some implementations of the second aspect, the restricted capability includes at least one of the following: a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

With reference to the second aspect, in some implementations of the second aspect, the first network device is a central unit, and the second network device is a distributed unit; or the first network device is a master node, and the second network device is a secondary node.

With reference to the second aspect, in some implementations of the second aspect, the first network device is a central unit, the second network device is a distributed unit, and the first information or the second information is carried in a UE CONTEXT MODIFICATION REQUEST message, or the first information or the second information is carried in a UE CONTEXT SETUP REQUEST message.

With reference to the second aspect, in some implementations of the second aspect, the first network device is a master node, the second network device is a secondary node, and the first information or the second information is carried in a CG-ConfigInfo message.

According to a third aspect, a communication method is provided. The method may be performed by a terminal device, may be performed by a module (for example, a processor, a chip, or a chip system) used in the terminal device, or may be implemented by a logical node, a logical module, or software that can implement all or some functions of the terminal device.

The method includes: The terminal device receives third information sent by a first network device, where the third information indicates the terminal device to report a restricted capability; and the terminal device sends the restricted capability to the first network device based on the third information.

With reference to the third aspect, in some implementations of the third aspect, the terminal device is a multi-card terminal device.

According to a fourth aspect, a communication method is provided. The method includes: A first network device sends first information or second information to a second network device, where the first information indicates a candidate band and/or a candidate band combination, the candidate band and/or the candidate band combination are/is used by a terminal device to report a restricted capability, the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers; the first network device sends third information to the terminal device, where the third information indicates that the terminal device is allowed to report the restricted capability; and the terminal device sends the restricted capability to the first network device, where the restricted capability is determined by the terminal device based on the third information.

With reference to the fourth aspect, in some implementations of the fourth aspect, the terminal device is a multi-card terminal device.

According to a fifth aspect, a communication method is provided. The method may be performed by a network device, may be performed by a module (for example, a processor, a chip, or a chip system) used in the network device, or may be implemented by a logical node, a logical module, or software that can implement all or some functions of the network device. The network device may be an access network device. For example, the network device may include a central unit CU and a distributed unit DU, or the network device may be a master node MN and a secondary node SN.

The method includes: A first network device receives fourth information sent by a second network device, where the fourth information indicates a first candidate band and/or a first candidate band combination, and the first candidate band and/or the first candidate band combination are/is used by a terminal device to report a restricted capability corresponding to the second network device; the first network device determines fifth information based on the fourth information, where the fifth information indicates a second candidate band and/or a second candidate band combination, and the second candidate band and/or the second candidate band combination are/is used by the terminal device to report a restricted capability corresponding to the first network device and the restricted capability corresponding to the second network device; and the first network device sends the fifth information to the terminal device.

In this application, the restricted capability corresponding to the second network device may be understood as a restricted capability that is reported by the terminal device and that is determined by the second network device based on a configuration related to the second network device, or may be expressed as a restricted capability related to the second network device. Related descriptions may also be understood in this way, and details are not described below again.

With reference to the fifth aspect, in some implementations of the fifth aspect, the method further includes: The first network device receives the restricted capabilities sent by the terminal device, where the restricted capabilities are determined by the terminal device based on the fifth information.

With reference to the fifth aspect, in some implementations of the fifth aspect, the fourth information includes one or more candidate bands, or the fourth information includes one or more candidate band combinations; and the fifth information includes one or more candidate bands, or the fifth information includes one or more candidate band combinations.

With reference to the fifth aspect, in some implementations of the fifth aspect, before the first network device receives the fourth information sent by the second network device, the method further includes: The first network device sends sixth information to the second network device, where the sixth information indicates a third candidate band and/or a third candidate band combination, and the third candidate band and/or the third candidate band combination are/is used by the terminal device to report the restricted capability corresponding to the first network device.

With reference to the fifth aspect, in some implementations of the fifth aspect, the sixth information includes one or more candidate bands, or the sixth information includes one or more candidate band combinations.

With reference to the fifth aspect, in some implementations of the fifth aspect, the first network device is a master node, and the second network device is a secondary node.

According to a sixth aspect, a communication method is provided. The method may be performed by a network device, may be performed by a module (for example, a processor, a chip, or a chip system) used in the network device, or may be implemented by a logical node, a logical module, or software that can implement all or some functions of the network device. The network device may be an access network device. For example, the network device may include a central unit CU and a distributed unit DU, or the network device may be a master node MN and a secondary node SN.

The method includes: A second network device determines fourth information, where the fourth information indicates a first candidate band and/or a first candidate band combination, and the first candidate band and/or the first candidate band combination are/is used by a terminal device to report a restricted capability corresponding to the second network device; and the second network device sends the fourth information to a first network device.

With reference to the sixth aspect, in some implementations of the sixth aspect, the fourth information includes one or more candidate bands, or the fourth information includes one or more candidate band combinations.

With reference to the sixth aspect, in some implementations of the sixth aspect, before the second network device determines the fourth information, the method further includes: The second network device receives sixth information sent by the first network device, where the sixth information indicates a third candidate band and/or a third candidate band combination, and the third candidate band and/or the third candidate band combination are/is used by the terminal device to report a restricted capability corresponding to the first network device; and the second network device determines the fourth information based on the sixth information.

With reference to the sixth aspect, in some implementations of the sixth aspect, the sixth information includes one or more candidate bands, or the sixth information includes one or more candidate band combinations.

With reference to the sixth aspect, in some implementations of the sixth aspect, the first network device is a master node, and the second network device is a secondary node.

According to a seventh aspect, a communication apparatus is provided. The apparatus includes: an interface unit, configured to send first information to a second network device, where the first information indicates a candidate band and/or a candidate band combination, and the candidate band and/or the candidate band combination are/is used by a terminal device to report a restricted capability; or an interface unit, configured to send second information to the second network device, where the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers.

With reference to the seventh aspect, in some implementations of the seventh aspect, the interface unit is further configured to: send third information to the terminal device, where the third information indicates that the terminal device is allowed to report the restricted capability; and receive the restricted capability sent by the terminal device, where the restricted capability is determined by the terminal device based on the third information.

With reference to the seventh aspect, in some implementations of the seventh aspect, the first information includes one or more candidate bands, or the first information includes one or more candidate band combinations.

With reference to the seventh aspect, in some implementations of the seventh aspect, the second information includes one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

With reference to the seventh aspect, in some implementations of the seventh aspect, the restricted capability includes at least one of the following: a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

With reference to the seventh aspect, in some implementations of the seventh aspect, the first information or the second information is carried in a UE CONTEXT MODIFICATION REQUEST message, or the first information or the second information is carried in a UE CONTEXT SETUP REQUEST message.

With reference to the seventh aspect, in some implementations of the seventh aspect, the first information or the second information is carried in a CG-ConfigInfo message.

According to an eighth aspect, a communication apparatus is provided. The apparatus includes: an interface unit, configured to receive first information sent by a first network device, where the first information indicates a candidate band and/or a candidate band combination, and the candidate band and/or the candidate band combination are/is used by a terminal device to report a restricted capability; or an interface unit, configured to receive second information sent by the first network device, where the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers.

With reference to the eighth aspect, in some implementations of the eighth aspect, the first information includes one or more candidate bands, or the first information includes one or more candidate band combinations.

With reference to the eighth aspect, in some implementations of the eighth aspect, the second information includes one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

With reference to the eighth aspect, in some implementations of the eighth aspect, the restricted capability includes at least one of the following: a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

With reference to the eighth aspect, in some implementations of the eighth aspect, the first information or the second information is carried in a UE CONTEXT MODIFICATION REQUEST message, or the first information or the second information is carried in a UE CONTEXT SETUP REQUEST message.

With reference to the eighth aspect, in some implementations of the eighth aspect, the first information or the second information is carried in a CG-ConfigInfo message.

According to a ninth aspect, a communication apparatus is provided. The apparatus includes: an interface unit, configured to receive third information sent by a first network device, where the third information indicates a terminal device to report a restricted capability; and the interface unit is further configured to send the restricted capability to the first network device based on the third information.

According to a tenth aspect, a communication apparatus is provided. The apparatus includes: an interface unit, configured to receive fourth information sent by a second network device, where the fourth information indicates a first candidate band and/or a first candidate band combination, and the first candidate band and/or the first candidate band combination are/is used by a terminal device to report a restricted capability corresponding to the second network device; and a processing unit, configured to determine fifth information based on the fourth information, where the fifth information indicates a second candidate band and/or a second candidate band combination, and the second candidate band and/or the second candidate band combination are/is used by the terminal device to report a restricted capability corresponding to the first network device and the restricted capability corresponding to the second network device; and the interface unit is further configured to send the fifth information to the terminal device.

With reference to the tenth aspect, in some implementations of the tenth aspect, the interface unit is further configured to receive the restricted capabilities sent by the terminal device, where the restricted capabilities are determined by the terminal device based on the fifth information.

With reference to the tenth aspect, in some implementations of the tenth aspect, the fourth information includes one or more candidate bands, or the fourth information includes one or more candidate band combinations; and the fifth information includes one or more candidate bands, or the fifth information includes one or more candidate band combinations.

With reference to the tenth aspect, in some implementations of the tenth aspect, before receiving the fourth information sent by the second network device, the interface unit is further configured to send sixth information to the second network device, where the sixth information indicates a third candidate band and/or a third candidate band combination, and the third candidate band and/or the third candidate band combination are/is used by the terminal device to report the restricted capability corresponding to the first network device.

With reference to the tenth aspect, in some implementations of the tenth aspect, the sixth information includes one or more candidate bands, or the sixth information includes one or more candidate band combinations.

According to an eleventh aspect, a communication apparatus is provided. The apparatus includes: a processing unit, configured to determine fourth information, where the fourth information indicates a first candidate band and/or a first candidate band combination, and the first candidate band and/or the first candidate band combination are/is used by a terminal device to report a restricted capability corresponding to a second network device; and an interface unit, configured to send the fourth information to a first network device.

With reference to the eleventh aspect, in some implementations of the eleventh aspect, the fourth information includes one or more candidate bands, or the fourth information includes one or more candidate band combinations.

With reference to the eleventh aspect, in some implementations of the eleventh aspect, before determining the fourth information, the interface unit is further configured to receive sixth information sent by the first network device, where the sixth information indicates a third candidate band and/or a third candidate band combination, and the third candidate band and/or the third candidate band combination are/is used by the terminal device to report a restricted capability corresponding to the first network device; and the processing unit is further configured to determine the fourth information based on the sixth information.

With reference to the eleventh aspect, in some implementations of the eleventh aspect, the sixth information includes one or more candidate bands, or the sixth information includes one or more candidate band combinations.

According to a twelfth aspect, a communication apparatus is provided. The apparatus may be a network device, may be a component (for example, a processor, a chip, or a chip system) of the network device, or may be a logical node, a logical module, or software that can implement all or some functions of the network device. The apparatus has a function of implementing the first aspect, the second aspect, the fourth aspect, the fifth aspect, and various possible implementations. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to cause the apparatus to perform the communication methods according to the first aspect, the second aspect, the fourth aspect, the fifth aspect, and various possible implementations. In this design, the apparatus may be the network device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, to cause the chip in the network device to perform the first aspect, the second aspect, the fourth aspect, the fifth aspect, and various possible implementations in the first aspect, the second aspect, the fourth aspect, the fifth aspect. Optionally, the processing unit may execute the instructions in the storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits for controlling program execution of the communication method according to the first aspect.

According to a thirteenth aspect, a communication apparatus is provided. The apparatus may be a terminal device, may be a component (for example, a processor, a chip, or a chip system) of the terminal device, or may be a logical node, a logical module, or software that can implement all or some functions of the terminal device. The apparatus has a function of implementing the second aspect and various possible implementations of the second aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to cause the apparatus to perform the communication method according to the third aspect and various possible implementations of the third aspect. In this design, the apparatus may be the terminal device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, to cause the chip in the network device to perform the communication method according to the third aspect and various possible implementations of the third aspect. Optionally, the processing unit may execute the instructions in the storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits for controlling program execution of the communication method according to the second aspect.

According to a fourteenth aspect, a communication system is provided. The communication system includes a terminal device, a first network device, and a second network device. The first network device sends first information or second information to the second network device, where the first information indicates a candidate band and/or a candidate band combination, the candidate band and/or the candidate band combination are/is used by the terminal device to report a restricted capability, the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers; the first network device sends third information to the terminal device, where the third information indicates that the terminal device is allowed to report the restricted capability; and the terminal device sends the restricted capability to the first network device, where the restricted capability is determined by the terminal device based on the third information.

In a possible implementation, the terminal device is a multi-card terminal device.

According to a fifteenth aspect, a communication system is provided. The communication system includes the communication apparatus according to the sixth aspect, the communication apparatus according to the seventh aspect, and the communication apparatus according to the eighth aspect. The communication system may complete the communication methods according to the first aspect to the third aspect and any possible implementation of the first aspect to the third aspect.

According to a sixteenth aspect, a communication system is provided. The communication system includes the communication apparatus according to the ninth aspect, the communication apparatus according to the tenth aspect, and the communication apparatus according to the eighth aspect. The communication system may complete the communication methods according to the fourth aspect and the fifth aspect and any possible implementation of the fourth aspect and the fifth aspect.

According to a seventeenth aspect, a computer-readable storage medium is provided. The computer-readable storage medium stores a computer program; and when the computer program is run on a computer, the computer is caused to execute instructions of the methods according to the first aspect to the fifth aspect or any possible implementation of the first aspect to the fifth aspect.

According to an eighteenth aspect, a communication apparatus is provided. The communication apparatus includes a processor, and the processing unit may execute instructions to cause the methods according to the first aspect to the fifth aspect or any possible implementation of the first aspect to the fifth aspect to be performed.

The processor mentioned above may be a general-purpose central processing unit (central processing unit, CPU), a microprocessor, an application-specific integrated circuit (application-specific integrated circuit, ASIC), or one or more integrated circuits for controlling program execution of the communication methods according to the first aspect to the fifth aspect.

In a possible implementation, the communication apparatus further includes a memory, configured to store the foregoing executable instructions. Optionally, the memory and the processor are integrated together.

In a possible implementation, the communication apparatus further includes a communication interface, configured to input and/or output signaling or data.

In a possible implementation, the communication apparatus is a chip.

According to a nineteenth aspect, a computer program product is provided. The product includes computer program code; and when the computer program code is run, instructions of the methods according to the first aspect to the fifth aspect or any possible implementation of the first aspect to the fifth aspect are executed.

According to a twentieth aspect, a chip system is provided. The chip system includes a memory and a processor. The memory is configured to store instructions, and the processor is configured to invoke the instructions from the memory and run the instructions to cause the methods according to the first aspect to the fifth aspect and various possible implementations thereof to be performed.

The chip system may include an input circuit or interface configured to send information or data, and an output circuit or interface configured to receive information or data.

Specifically, for beneficial effects of other aspects, refer to the beneficial effects described in the first aspect.

### BRIEF DESCRIPTION OF DRAWINGS

FIG. 1 is a diagram of a possible and non-limiting system to which an embodiment of this application is applied;
FIG. 2 is a diagram of a possible communication method according to an embodiment of this application;
FIG. 3 is a diagram of another possible communication method according to an embodiment of this application;
FIG. 4 is a diagram of another possible communication method according to an embodiment of this application;
FIG. 5 is a block diagram of a communication apparatus according to an embodiment of this application; and
FIG. 6 is a block diagram of another communication apparatus according to an embodiment of this application.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th Generation, 6G) mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

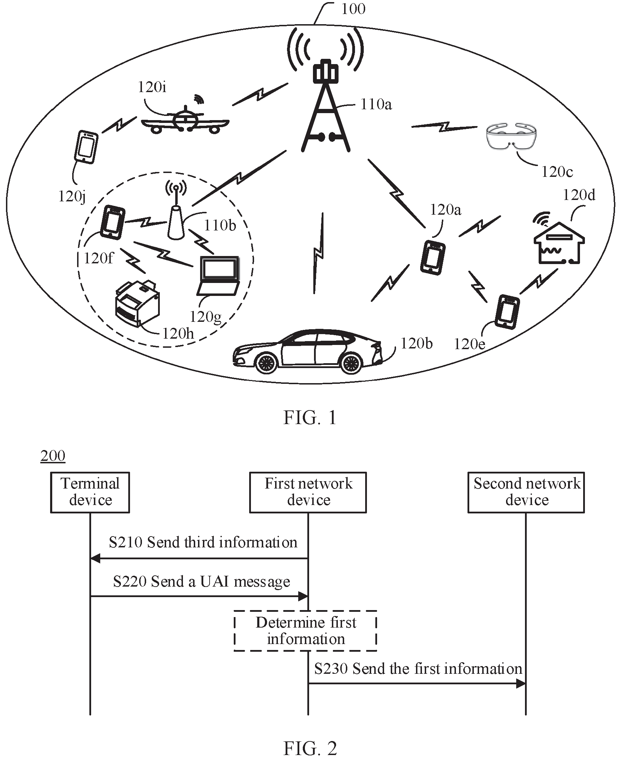

FIG. 1 is a diagram of a possible and non-limiting system to which an embodiment of this application is applied.

As shown in FIG. 1, the communication system includes a radio access network (radio access network, RAN) 100. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to a core network in a wireless or wired manner. A core network device in the core network and the RAN node 110 in the RAN 100 may be different physical devices respectively, or may be a same physical device that integrates a core network logical function and a radio access network logical function.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). Alternatively, the RAN 100 may be an open radio access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system, may be a gNB or a transmission point (TRP or TP) in a 5G, for example, NR, system, or one antenna panel or one group of antenna panels (including a plurality of antenna panels) of a base station in a 5G system, or may be a network node that forms a gNB or a transmission point, for example, a baseband unit (BBU) or a distributed unit (distributed unit, DU).

The RAN node 110 may also be sometimes referred to as an access network device, a network device, a RAN entity, an access node, or the like, and forms a part of the communication system, to help the terminal implement radio access. A plurality of RAN nodes 110 in the communication system may be nodes of a same type, or may be nodes of different types. In some scenarios, roles of the RAN node 110 and the terminal 120 are relative. For example, the network element 1201 in FIG. 1 may be a helicopter or an uncrewed aerial vehicle, and may be configured as a mobile base station. For the terminal 120j that accesses the RAN 100 through the network element 1201, the network element 1201 is a base station. However, for the base station 110a, the network element 1201 is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation base station (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The CU and the DU may be configured based on protocol layer functions of a radio network implemented by the CU and the DU. For example, the CU is configured to implement functions of a packet data convergence protocol (packet data convergence protocol, PDCP) layer and protocol layers (for example, a radio resource control (radio resource control, RRC) layer and/or a service data adaptation protocol (service data adaptation protocol, SDAP) layer) above the PDCP layer; and the DU is configured to implement functions of protocol layers (for example, a radio link control (radio link control, RLC) layer, a MAC layer, and/or a physical (physical, PHY) layer) below the PDCP layer. For another example, the CU is configured to implement functions of protocol layers above a PDCP layer (for example, an RRC layer and/or an SDAP layer), and the DU is configured to implement functions of the PDCP layer and protocol layers below the PDCP layer (for example, an RLC layer, a MAC layer, and/or a PHY layer). For specific descriptions of the foregoing protocol layers, refer to a related technical specification of the 3GPP or a technical specification of another applicable communication protocol.

The foregoing division of the processing functions of the CU and the DU based on the protocol layers is merely an example, and another division manner may be used. This is not limited in this application. For example, in a design, the CU or the DU may be further divided to have some processing functions of protocol layers. In a design, some functions of an RLC layer and functions of protocol layers above the RLC layer are set on the CU, and remaining functions of the RLC layer and functions of protocol layers below the RLC layer are set on the DU.

In embodiments of this application, an apparatus configured to implement a function of the network device may be a network device, or may be an apparatus that can support the network device in implementing the function, for example, a chip system or a combined component or part that can implement the function of the network device. The apparatus may be mounted in the network device. A specific technology and a specific device form that are used by the network device are not limited in embodiments of this application.

The terminal device in embodiments of this application may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an on board unit (on board unit, OBU), a roadside unit (roadside unit, RSU), a vehicle-mounted communication unit (telematics box, T-box), a chip, or a system-on-a-chip (system-on-a-chip, SoC). The chip or the SoC may be mounted in a vehicle, an OBU, an RSU, or a T-box. The terminal device in embodiments of this application further includes at least any one of a user equipment, an augmented reality AR/virtual reality VR/extended reality XR device, a wearable device, a smart home appliance terminal, a terminal device and a communication module of the terminal device, a mobile phone and a communication module in the mobile phone, a vehicle and a communication module in the vehicle, an information processing device, a display device, a network apparatus, a base station, a TRP, a customer premises equipment (customer premises equipment, CPE), a router, a network access device, and the like.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on a smartphone, such as smart watches or smart glasses, and devices that dedicated to only one type of application function and need to work with other devices such as a smartphone, such as various smart bands or smart jewelry for monitoring physical signs.

In embodiments of this application, an apparatus configured to implement a function of the terminal device, namely, a terminal apparatus, may be a terminal device, or may be an apparatus that can support the terminal device in implementing the function, for example, a chip system or a chip. The apparatus may be mounted in the terminal device. In embodiments of this application, the chip system may include a chip, or may include a chip and another discrete component.

It should be understood that FIG. 1 is merely a diagram, and another device that is not shown may be further included. In addition, a quantity of terminal devices and a quantity of network devices included in the communication system are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a windows operating system. The application layer includes applications such as a browser, an address book, word processing software, and instant messaging software. In addition, a specific structure of an entity for executing a method provided in this application is not particularly restricted in this application, provided that communication can be performed according to the method provided in embodiments of this application by running a program that records code of the method provided in this application. For example, the method provided in embodiments of this application may be performed by a terminal device or a network device, or a functional module that is in a terminal device or a network device and that can invoke the program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable storage medium may include, but is not limited to, a magnetic storage component (for example, a hard disk, a floppy disk, or a magnetic tape), an optical disc (for example, a compact disc (compact disc, CD), a digital versatile disc (digital versatile disc, DVD), or the like), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include, but is not limited to, a radio channel, and various other media that can store, contain and/or carry instructions and/or data.

For ease of understanding of embodiments of this application, concepts and technologies used in embodiments of this application are first briefly described.

It should be understood that related terms and descriptions below are applicable to all embodiments in this specification. Different embodiments may be used independently, or may be used in combination based on some internal or external relationships. Different implementations in embodiments may be used independently or in combination.

### 1. Multi-card scenario

A multi-card terminal may be a terminal that supports at least two user identities, where the user identity may be a subscriber identity card (a SIM, a USIM card, or an eSIM). This application does not require that the at least two user identities be of a same type subscriber identity card. The multi-card terminal may separately register, by using two or more telephone cards, with a same network or different networks, for example, a same access network device or different access network devices and/or a same core network device or different core network devices. It may be understood that the two cards of the multi-card terminal operate independently. From the perspective of a network side, one card corresponds to one UE, and a plurality of cards in the multi-card terminal are equivalent to a plurality of UEs from the perspective of the network side.

### 2. Temporary capability update mechanism

If UE's capability is temporarily a restricted UE capability, upon entering a connected state through an RRC setup (setup) process or an RRC resume (resume) process, the UE enabled with the temporary capability restriction mechanism (that is, a UAI-based temporary capability update mechanism used for multi-card, also referred to as a UAI-based temporary capability restriction mechanism used for multi-card) may report the specific restricted UE capability via a UE assistance information UAI message, to indicate that the capability of the terminal device is updated to the temporary capability. The terminal device may indicate, in a proactive manner, that the capability of the terminal device is updated to the temporary capability, or may indicate, in a reactive manner, that the capability of the terminal device is updated to the temporary capability.

The proactive (proactive) manner of indicating the temporary capability of the terminal device means that the terminal device notifies the network device of the updated temporary capability of the terminal device in advance, and that the network device configures a related parameter for the terminal device based on the temporary capability of the terminal device, so that a configuration of the terminal device does not exceed the current capability of the terminal device. In the proactive manner, a configuration sent by the network device to the terminal device currently or in the future does not exceed the current capability of the terminal device.

The reactive (reactive) manner of indicating the temporary capability of the terminal device means that the terminal device notifies the network device of the updated temporary capability of the terminal device only when the terminal device finds that a current configuration exceeds the current temporary capability, and that the network device reconfigures a related parameter for the terminal device based on the current temporary capability of the terminal device, so that the configuration of the terminal device does not exceed the current capability of the terminal device.

For the proactive (proactive) manner, the network device first configures (or indicates) filter (filter) information for the terminal device. The filter information indicates a range of the temporary capability reported by the terminal device. For example, a candidate band (band, also referred to as a frequency band) list includes one or more bands. The terminal device reports, based on the filter information, the restricted temporary capability of the terminal device, for example, a restricted band (band) and/or a restricted band combination (band combination, BC), and a restricted MIMO capability corresponding to the restricted band or band combination. To reduce bit overheads of a temporary capability message, when the terminal device indicates the restricted temporary capability, content in the filter information needs to be indexed. To be specific, a corresponding band in the restricted temporary capability is indicated by using an index (a sequence representation in a band list) of a band in the band list in the filter information. For example, the filter information sent by the network device to the terminal device includes the band list, where content of the band list includes {band A, band B, band C, band D, band E}; and the UE reports the restricted temporary capability of the terminal device to the network device, where the restricted BC is {band A+band B+band D}. In this case, the terminal device indicates {1+2+4} to represent {band A+band B+band D}. The terminal device may further indicate a restricted maximum quantity of MIMO layers corresponding to {1} (indicating the band A) and a restricted maximum quantity of MIMO layers corresponding to {2} (indicating the band B).

In a CU-DU scenario, the UE sends UE capability information to the CU, and the CU sends the UE capability information reported by the UE to the DU, to help the DU generate a related MAC/PHY configuration (for example, CellGroupConfig) and provide a reference for the DU to subsequently schedule the UE. In addition, if the terminal device reports the UAI message, the terminal device sends the UAI message to the CU, and the CU sends the UAI message (used as a container) reported by the terminal device to the DU, to help the DU generate a related MAC/PHY configuration (for example, CellGroupConfig) and provide a reference for the DU to subsequently schedule the terminal device.

It should be understood that, in the foregoing implementation, after the UAI-based temporary capability update mechanism is introduced, the restricted temporary capability is included in the UAI and is automatically sent by the CU to the DU. Because a specific restricted temporary capability reported by the UE can be learned only with reference to the filter information of the network device, if the UAI is sent by the CU to the DU only in an existing mechanism, the DU does not understand specific content of the temporary capability, and consequently cannot perform correct configuration or scheduling based on the temporary capability. The DU needs to understand at least the maximum quantity of MIMO layers indicated by the terminal device in the restricted temporary capability for the DU to configure or schedule the UE.

In an NR dual connectivity (dual connectivity, DC) scenario, the terminal device may communicate with an access network device in a DC or multi-connectivity technology. The terminal device may be both connected to two access network devices: a master node (master node, MN) (namely, a master network device) and a secondary node (secondary node, SN) (namely, a secondary network device). The master node and the secondary node may both provide a data receiving and sending service for the terminal device. In this way, radio resources of the two access network devices can be both used, so that a rate of data transmitted by the terminal device can be improved. There is a signaling interface between the master node and the secondary node. The master node and the secondary node may determine a capability of the terminal device through negotiation over the signaling interface, and the master node and the secondary node may configure the terminal device based on the capability of the terminal device. The capability information of the terminal device reported by the terminal device is total capability information in DC, that is, total capability information for the master node and the secondary node. Therefore, the master node and the secondary node need to negotiate which part of the capability information of the terminal device is separately used by the master node and the secondary node, to avoid a case in which simultaneous configuration exceeds the capability of the terminal device.

The MN and the SN need to perform capability negotiation to correctly configure the terminal device. In addition, if the terminal device reports the UAI message, the MN sends the UAI message to the SN, the MN sends the UAI message (used as a container) reported by the terminal device to the SN, and the MN and the SN may perform capability negotiation based on the restricted temporary capability of the UE to correctly configure the terminal device.

It should be understood that, in the foregoing implementation, after the UAI-based temporary capability update mechanism is introduced, the restricted temporary capability is included in the UAI and is automatically sent by the MN to the SN. Because a specific restricted temporary capability reported by the terminal device can be learned only with reference to the filter information of the network device, if the UAI is sent by the MN to the SN only in an existing mechanism, the SN does not understand specific content of the temporary capability, and consequently cannot perform correct capability configuration based on the temporary capability and cannot perform correct configuration or scheduling based on the temporary capability. The SN needs to understand the band and/or the band combination indicated by the terminal device in the restricted temporary capability for capability negotiation, and needs to understand at least the maximum quantity of MIMO layers indicated by the terminal device in the restricted temporary capability for the SN to configure or schedule the UE.

It should be further understood that the filter information of the network device is determined based on a band or a frequency that may be configured by the network device for the terminal device. In NR DC, the MN does not know a possible configuration of the SN. Therefore, the MN sets content of the filter information based only on a possible configuration of the MN, and the content may not include the possible configuration of the SN. Consequently, the content of the filter information is inappropriate, a range of the restricted temporary capability reported by the UE is inappropriate, and the network device cannot perform optimal configuration, leading to a loss of system performance.

To resolve the foregoing problem, this application provides a communication method. In a CU-DU or MN-SN communication scenario, filter information is sent to a DU or an SN, so that a network device can correctly configure or schedule a terminal device based on a restricted temporary capability of the terminal device, thereby improving communication reliability and stability.

In this application, "sending information to... (a terminal)" may be understood as that a destination end of the information is the terminal, and may include directly or indirectly sending the information to the terminal. "Receiving information from... (a terminal)" may be understood as that a source end of the information is the terminal, and may include directly or indirectly receiving the information from the terminal. The information may undergo necessary processing, for example, a format change, between the source end for sending the information and the destination end. However, the destination end may understand valid information from the source end. A similar expression in this application may be understood similarly, and details are not described herein again.

For ease of understanding of embodiments of this application, the following descriptions are provided.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally represents an "or" relationship between the associated objects. "At least one item (piece) of the following" or a similar expression thereof means any combination of these items, including a singular item (piece) or any combination of plural items (pieces). For example, at least one item (piece) of a, b, and c may indicate a, b, c, a and b, a and c, b and c, or a, b, and c. Each of a, b, and c may be in a singular form or a plural form.

Third, in this application, "first", "second", and various numerical numbers indicate differentiation for ease of description, and are not used to limit the scope of embodiments of this application, for example, are intended to distinguish between different messages but not to describe a specific order or sequence. It should be understood that objects described in such a way are interchangeable in an appropriate circumstance, so that a solution other than embodiments of this application can be described.

Fourth, in this application, the terms "include", "have", and any variants thereof are intended to cover non-exclusive inclusion. For example, a process, a method, a system, a product, or a device that includes a series of steps or units is not necessarily limited to those expressly listed steps or units, but may include other steps or units not expressly listed or inherent to the process, the method, the product, or the device.

Fifth, "protocols" in this application may be standard protocols in the communication field, for example, may include a 5G protocol, a new radio (new radio, NR) protocol, and a related protocol applied to a future communication system. This is not limited in this application. "Predefinition" may include definition in advance, for example, definition in a protocol. "Pre-configuration" may be implemented by pre-storing corresponding code or a corresponding table in a device, or may be implemented in another manner that may indicate related information. A specific implementation thereof is not limited in this application.

Sixth, in this application, "communication" may also be described as "data transmission", "information transmission", "data processing", or the like. "Transmission" includes "sending" and "receiving".

The following describes, in detail with reference to the accompanying drawings, the communication method provided in embodiments of this application. Embodiments provided in this application are applicable to any communication scenario in which a transmit-end device communicates with a receive-end device, for example, are applied to the communication system shown in FIG. 1.

FIG. 2 is a diagram of an embodiment of a communication method 200 according to this application. As shown in FIG. 2, the method 200 includes the following steps.

S210. A first network device sends third information to a terminal device. Correspondingly, the terminal device receives the third information sent by the first network device.

The third information indicates that the terminal device is allowed to report a restricted capability (which may also be referred to as a restricted temporary capability).

In a possible embodiment, the restricted capability includes at least one of the following: a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination. The maximum quantity of MIMO layers includes a maximum quantity of uplink MIMO layers and/or a maximum quantity of downlink MIMO layers.

In a possible embodiment, the third information indicates filter information. The filter information is used by the terminal device to report the restricted capability, or the filter information indicates a range of the restricted capability reported by the terminal device, or the filter information indicates a candidate band and/or a candidate band combination (the candidate band and/or the candidate band combination are/is used by the terminal device to report the restricted capability based on the candidate band and/or the candidate band combination). The terminal device may indicate the restricted capability of the terminal device to the network device based on the filter information. Specifically, the terminal device indicates, to the network device based on the filter information, the restricted band and/or the restricted band combination, the restricted maximum quantity of MIMO layers corresponding to the restricted band and/or the restricted band combination, and/or the restricted maximum carrier bandwidth corresponding to the restricted band and/or the restricted band combination.

In a possible embodiment, the third information includes a candidate band list, and the candidate band list includes one or more candidate bands.

In a possible embodiment, the third information includes a candidate band combination list, and the candidate band combination list includes one or more candidate band combinations.

In a possible embodiment, the first network device sends an RRC reconfiguration message to the terminal device, where the RRC reconfiguration message is used to configure the terminal device to be allowed to send a UAI message to the first network device to indicate the restricted capability, and the RRC reconfiguration message includes the third information. Optionally, the third information is carried in other configuration otherconfig field in the RRC reconfiguration message.

In a possible embodiment, the first network device is a central unit CU, or the first network device is a master node MN.

S220. The terminal device sends the UAI message to the first network device. Correspondingly, the first network device receives the UAI message sent by the terminal device.

The terminal device determines the restricted capability based on the third information, and sends the UAI message to the first network device, where the UAI message includes the restricted capability of the terminal device.

To reduce bit overheads of a temporary capability message, when the terminal device indicates the restricted capability, content in the filter information needs to be indexed. To be specific, a corresponding band and/or band combination in the restricted capability are/is indicated by using an index (a sequence representation in a band list) of a band in the band list in the filter information.

In a possible embodiment, the terminal device indicates the restricted capability of the terminal device to the first network device based on the filter information indicated by the third information.

In a possible embodiment, the third information may indicate or may not indicate the filter information. If the third information does not indicate the filter information, the terminal device indicates the restricted capability of the terminal device to the first network device based on the filter information indicated in a terminal device capability enquiry (UECapabilityEnquiry) message. The terminal device capability enquiry message is a message sent by the first network device to the terminal device, and is used by the terminal device to report capability information (not the restricted temporary capability of the terminal device) of the terminal device. The filter information indicated in the terminal device capability enquiry message includes a candidate band list, and the candidate band list includes one or more candidate bands.

Specifically, the restricted band and/or band combination, the restricted maximum quantity of MIMO layers corresponding to the restricted band and/or band combination, and/or the restricted maximum carrier bandwidth corresponding to the restricted band and/or band combination are indicated to the first terminal device based on the filter information, where the maximum quantity of MIMO layers includes a maximum quantity of uplink MIMO layers and/or a maximum quantity of downlink MIMO layers.

For example, the filter information sent by the first network device to the terminal device includes a band list, where content of the band list includes {band A, band B, band C, band D, band E}. The terminal device reports the restricted temporary capability of the terminal device to the network device, where the restricted BC is {band A+band B+band D}. In this case, the terminal device reports the restricted capability, and the restricted capability indicates {1+2+4} to indicate {band A+band B+band D}. The terminal device may further indicate a restricted maximum quantity of MIMO layers corresponding to {1} (indicating the band A) and a restricted maximum quantity of MIMO layers corresponding to {2} (indicating the band B).

S230. The first network device sends first information to a second network device. Correspondingly, the second network device receives the first information sent by the first network device.

In a possible embodiment, before step S230, the method further includes: The first network device determines the first information.

The first information indicates the filter information. The filter information is used by the terminal device to report the restricted capability, or the filter information indicates a range of the restricted capability reported by the terminal device, or the filter information indicates a candidate band and/or a candidate band combination (the candidate band and/or the candidate band combination are/is used by the terminal device to report the restricted capability based on the candidate band and/or the candidate band combination).

In a possible embodiment, the first information includes a candidate band list, and the candidate band list includes one or more candidate bands.

In a possible embodiment, the first information includes a candidate band combination list, and the candidate band combination list includes one or more candidate band combinations.

In a possible embodiment, if the third information indicates filter information, content of the filter information indicated by the first information is the same as content of the filter information indicated by the third information. That is, the content indicated by the first information is the content of the filter information indicated by the first network device to the terminal device in S210.

In a possible embodiment, if the third information does not indicate filter information, content of the filter information indicated by the first information is the same as content of the filter information indicated in the terminal device capability enquiry message.

In a possible embodiment, step S230 further includes: The first network device sends a UAI message to the second network device, where content of the UAI message is content of the UAI message indicated by the terminal device to the first network device in S220, and includes the restricted capability of the terminal device.

In a possible embodiment, the first network device is a central unit CU, and the second network device is a distributed unit DU.

In a possible embodiment, the first information may be carried in a UE CONTEXT MODIFICATION REQUEST message, a UE CONTEXT SETUP REQUEST message, or a downlink RRC transfer message DL RRC MESSAGE TRANSFER. For example, an indication field may be newly added to the UE CONTEXT MODIFICATION REQUEST message or the UE CONTEXT SETUP REQUEST message, and the indication field includes the first information. Alternatively, an indication field may be newly added to a CU to DU RRC information CU to DU RRC Information field in the UE CONTEXT MODIFICATION REQUEST message or the UE CONTEXT SETUP REQUEST message, and the indication field includes the first information.

To cause the DU to correctly configure or schedule the terminal device based on the restricted temporary capability of the terminal device, the CU indicates the restricted temporary capability of the terminal device to the DU, and further needs to indicate, to the DU, the filter information configured by the CU for the terminal device.

For example, the network device (for example, the CU) configures (or indicates) the filter information for the terminal device. The terminal device sends the UAI message to the CU as the network device based on the filter information to report the restricted temporary capability of the terminal device. The CU sends the UAI message to the DU, where the UAI message includes the restricted temporary capability of the terminal device. The CU sends the first information to the DU, where the first information indicates the filter information. Therefore, the DU can correctly configure or schedule the terminal device.

In a possible embodiment, the first network device is a master node MN, and the second network device is a secondary node SN.

In a possible embodiment, the first information may be carried in a CG-ConfigInfo message.

To cause the SN to correctly perform capability negotiation based on the restricted temporary capability of the terminal device, and correctly configure or schedule the UE, the MN indicates the restricted temporary capability of the terminal device to the SN. In addition, the MN further needs to indicate the filter information configured by the MN for the UE to the SN.

For example, the network device configures (or indicates) the filter information for the terminal device, and the terminal device sends the UAI message to the network device based on the filter information, to report the restricted temporary capability of the terminal device. There are two possible manners.

Manner 1: The terminal device sends a UAI message to the MN, and the MN sends the UAI message to the SN, where the UAI message includes the restricted temporary capability of the terminal device. In this case, the MN sends the first information to the SN, where the first information indicates the filter information.

Manner 2: The terminal device separately sends a UAI message to the MN and the SN, where the UAI message includes the restricted temporary capability of the terminal device. In this case, the MN may not need to send the UAI message to the SN.

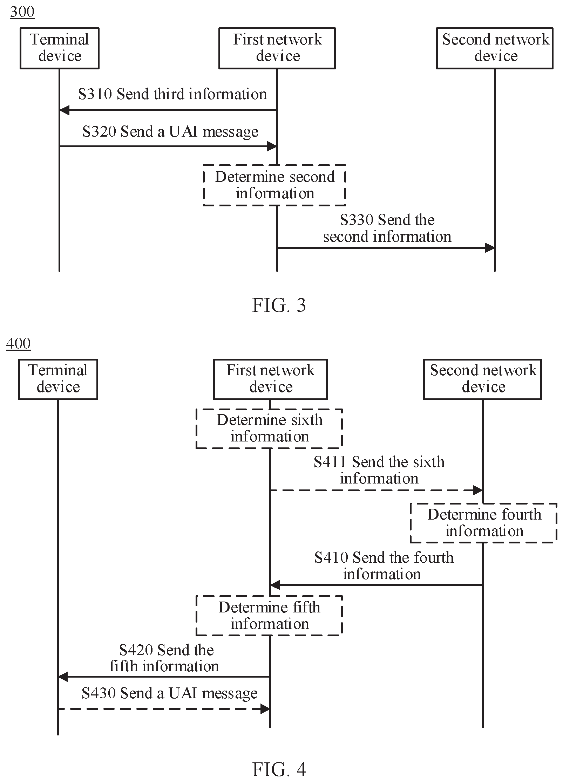

FIG. 3 is a diagram of an embodiment of a communication method 300 according to this application. As shown in FIG. 3, the method 300 includes the following steps.

S310. A first network device sends third information to a terminal device. Correspondingly, the terminal device receives the third information sent by the first network device.

The foregoing step is the same as step S210 in the method 200. Refer to the foregoing descriptions, and details are not described herein again.

S320. The terminal device sends a UAI message to the first network device. Correspondingly, the first network device receives the UAI message sent by the terminal device.

The foregoing step is the same as step S220 in the method 200. Refer to the foregoing descriptions, and details are not described herein again.

S330. The first network device sends second information to a second network device. Correspondingly, the second network device receives the second information sent by the first network device.

In a possible embodiment, before step S330, the method further includes: The first network device determines the second information.

The first network device determines a configured serving cell based on a restricted band and/or band combination. The first network device determines a corresponding restricted maximum quantity of MIMO layers and/or maximum carrier bandwidth based on the configured serving cell and a restricted capability, and sends the second information, where the second information indicates the restricted maximum quantity of MIMO layers and/or maximum carrier bandwidth corresponding to the serving cell, and the maximum quantity of MIMO layers includes a maximum quantity of uplink MIMO layers and/or a maximum quantity of downlink MIMO layers.

In a possible embodiment, the first network device is a central unit CU, and the second network device is a distributed unit DU.

In a possible embodiment, the first network device CU determines the configured serving cell based on the restricted band and/or band combination. There may be one or more serving cells, and the serving cell may include a primary cell and/or a secondary cell, for example, a secondary cell that needs to be released or a secondary cell that can be added. The first network device CU determines, based on the restricted maximum quantity of MIMO layers corresponding to the restricted band and/or band combination, the restricted maximum quantity of MIMO layers corresponding to the configured serving cell. The first network device CU determines, based on the restricted maximum carrier bandwidth corresponding to the restricted band and/or band combination, the restricted maximum carrier bandwidth corresponding to the configured serving cell.

In a possible embodiment, the second information indicates one or more configured serving cells, and for each serving cell, indicates a corresponding restricted maximum quantity of MIMO layers and/or maximum carrier bandwidth. It should be noted that, if the restricted capability of the terminal device sent by the terminal device includes a restricted maximum quantity of MIMO layers and/or maximum carrier bandwidth corresponding to a serving cell, and the first network device CU determines that the configured serving cell includes the serving cell whose maximum quantity of MIMO layers is restricted and/or the maximum carrier bandwidth, the first network device CU indicates, to the second network device DU, the restricted maximum quantity of MIMO layers and/or maximum carrier bandwidth corresponding to the serving cell; otherwise, the configured serving cell indicated by the first network device CU to the second network device DU does not have a corresponding restricted maximum quantity of MIMO layers and/or maximum carrier bandwidth (for example, empty), which indicates that a maximum quantity of MIMO layers and/or a maximum carrier bandwidth corresponding to the serving cell are/is not restricted.

In a possible embodiment, the second information may be carried in a UE CONTEXT MODIFICATION REQUEST message or a UE CONTEXT SETUP REQUEST message, or the second information may be carried in a DL RRC MESSAGE TRANSFER message. For example, an indication field may be newly added to the UE CONTEXT MODIFICATION REQUEST message or the UE CONTEXT SETUP REQUEST message, and the indication field includes the second information. Alternatively, an indication field may be newly added to a CU to DU RRC Information field in the UE CONTEXT MODIFICATION REQUEST message or the UE CONTEXT SETUP REQUEST message, and the indication field includes the second information.

In a possible embodiment, the first network device is a master node MN, and the second network device is a secondary node SN.

In a possible embodiment, the first network device MN determines, based on the restricted band and/or band combination, a band (carried in a selectedBandEntriesMNList field) selected by the first network device MN, and the first network device MN determines, based on the selected band and a restricted or forbidden band reported by the terminal device, a band that can be selected by the second network device SN and a restricted maximum quantity of MIMO layers corresponding to the band that can be selected by the second network device SN.

In a possible embodiment, the second information indicates one or more bands that can be selected by the second network device SN, and for each band that can be selected by the second network device SN, indicates a corresponding restricted maximum quantity of MIMO layers and/or maximum carrier bandwidth. It should be noted that, if the restricted capability of the terminal device sent by the terminal device includes a restricted maximum quantity of MIMO layers and/or maximum carrier bandwidth corresponding to a band, and the first network device MN determines that the band that can be selected by the second network device SN includes a serving cell whose maximum quantity of MIMO layers and/or maximum carrier bandwidth are/is restricted, the first network device MN indicates, to the second network device SN, the restricted maximum quantity of MIMO layers and/or maximum carrier bandwidth corresponding to the band that can be selected by the second network device SN; otherwise, a configured serving cell indicated by the first network device MN to the second network device SN does not have a corresponding restricted maximum quantity of MIMO layers and/or maximum carrier bandwidth (for example, empty), which indicates that a maximum quantity of MIMO layers and/or a maximum carrier bandwidth corresponding to the band that can be selected by the second network device SN are/is not restricted.

Optionally, the second information may be carried in an inter-node (inter-node) CG-ConfigInfo message. For example, an indication field may be newly added to the CG-ConfigInfo message, and the indication field includes the second information.

According to the solution of this application, the network device can correctly configure or schedule the terminal device based on a restricted temporary capability of the terminal device, thereby improving communication reliability and stability.

FIG. 4 is a diagram of an embodiment of a communication method 400 according to this application. As shown in FIG. 4, the method 400 includes the following steps.

S410. A second network device sends fourth information to a first network device. Correspondingly, the first network device receives the fourth information sent by the second network device.

In a possible embodiment, before step S410, the method further includes: The first network device determines the fourth information.

The fourth information indicates first filter information. The first filter information is used by a terminal device to report a restricted capability corresponding to the second network device, or the first filter information indicates a terminal device to report a range of a restricted capability corresponding to the second network device, or the filter information indicates a first candidate band and/or a first candidate band combination (the first candidate band and/or the first candidate band combination are/is used by a terminal device to report, based on the first candidate band and/or the first candidate band combination, a restricted capability corresponding to the second network device). For example, the first candidate band and/or the first candidate band combination are/is determined by the second network device.

In a possible embodiment, the fourth information includes a first candidate band list, and the first candidate band list includes one or more candidate bands.

In a possible embodiment, the fourth information includes a first candidate band combination list, and the first candidate band combination list includes one or more candidate band combinations.

In a possible embodiment, the first network device is a master node MN, and the second network device is a secondary node SN.

In a possible embodiment, the fourth information may be carried in a CG-Config message.

For example, the second network device SN determines, based on a current configuration (for example, a primary cell PCell configuration) of the first network device MN and a possible configuration of the second network device SN, the first candidate band and/or the first candidate band combination (that is, the fourth information) that need/needs to be included in the first filter information. The second network device SN sends the first filter information determined by the second network device SN to the first network device MN.

S420. The first network device sends fifth information to the terminal device.

In a possible embodiment, before step S420, the method further includes: The first network device determines the fifth information.

The first network device determines the fifth information based on the fourth information, and the fifth information indicates that the terminal device is allowed to report a restricted capability (which may also be referred to as a restricted temporary capability).

In a possible embodiment, the fifth information indicates second filter information. The second filter information is used by the terminal device to report a restricted capability corresponding to the first network device and the restricted capability corresponding to the second network device, or the second filter information indicates the terminal device to report a range of a restricted capability corresponding to the first network device and the range of the restricted capability corresponding to the second network device, or the filter information indicates a second candidate band and/or a second candidate band combination (the second candidate band and/or the second candidate band combination are/is used by the terminal device to report the restricted capability based on the second candidate band and/or the second candidate band combination).

In a possible embodiment, the fifth information includes a second candidate band list, and the second candidate band list includes one or more candidate bands.

In a possible embodiment, the fifth information includes a second candidate band combination list, and the second candidate band combination list includes one or more candidate band combinations.

In a possible embodiment, the first network device is a master node MN, and the second network device is a secondary node SN.

In a possible embodiment, content of the fifth information includes content of the fourth information, content of the second filter information includes content of the first filter information, the one or more candidate bands in the second candidate band list include the one or more candidate bands in the first candidate band list, and the one or more candidate band combinations in the second candidate band combination list include the one or more candidate band combinations in the first candidate band combination list.

The first network device MN determines third filter information, and the third filter information is information related to the first network device MN. For example, the first network device MN determines the third filter information based on the current configuration (for example, the primary cell PCell configuration) of the first network device MN and a possible configuration of the first network device MN.

The first network device MN determines the final second filter information (that is, the fifth information) based on the first filter information (that is, the fourth information) determined by the second network device SN and the third filter information determined by the first network device MN. Optionally, the content of the second filter information includes the content of the first filter information and content of the third filter information, and the first network device MN sends the fifth information to the terminal device.

S430. The terminal device sends the restricted capability to the first network device. Correspondingly, the first network device receives the restricted capability sent by the terminal device.

The terminal device determines the restricted capability based on the fifth information, and sends a UAI message to the first network device, where the UAI message indicates the restricted capability.

In a possible embodiment, the restricted capability includes at least one of the following: a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination. The maximum quantity of MIMO layers includes a maximum quantity of uplink MIMO layers and/or a maximum quantity of downlink MIMO layers.

Optionally, in another possible embodiment, the method 400 may further include the following step.

S411. The first network device sends sixth information to the second network device. Correspondingly, the second network device receives the sixth information sent by the first network device.

In a possible embodiment, before step S411, the method further includes: The first network device determines the sixth information.

The sixth information indicates the third filter information. For the third filter information, the third filter information is used by the terminal device to report the restricted capability corresponding to the first network device, or the third filter information indicates the terminal device to report the range of the restricted capability corresponding to the first network device, or the filter information indicates a third candidate band and/or a third candidate band combination (the third candidate band and/or the third candidate band combination are/is used by the terminal device to report, based on the third candidate band and/or the third candidate band combination, the restricted capability corresponding to the first network device). For example, the third candidate band and/or the third candidate band combination are/is determined by the first network device. In a possible embodiment, the sixth information includes a third candidate band list, and the third candidate band list includes one or more candidate bands.

In a possible embodiment, the sixth information includes a third candidate band combination list, and the first candidate band combination list includes one or more candidate band combinations.

In a possible embodiment, the first network device is a master node MN, and the second network device is a secondary node SN.

In a possible embodiment, the sixth information may be carried in a CG-ConfigInfo message.

The first network device MN determines the third filter information. For example, the first network device MN determines, based on the current configuration (for example, the primary cell PCell configuration) of the first network device MN and the possible configuration of the first network device MN, the third candidate band and/or the third candidate band combination band information (that is, the sixth information) that need/needs to be included in the third filter information.

The first network device MN sends, to the second network device SN, the third filter information (that is, the sixth information) determined by the first network device MN. The second network device SN determines the second filter information (that is, the fourth information) based on the third filter information (that is, the sixth information). For example, the candidate band and/or the first candidate band combination (that is, the fourth information) that need/needs to be included in the first filter information are/is determined based on the third filter information sent by the first network device MN and the possible configuration of the second network device SN.

The second network device SN sends the first filter information determined by the second network device SN to the first network device MN. The first network device MN determines the final second filter information (that is, the fifth information) based on the first filter information (that is, the fourth information) determined by the second network device SN and the third filter information (that is, the sixth information) determined by the first network device MN, and the first network device MN sends the fifth information to the terminal device. Optionally, the content of the second filter information includes the content of the first filter information and the content of the third filter information.

For example, a network device configures (or indicates) filter information for the terminal device, and the terminal device sends a UAI message to the network device based on the filter information, to report the restricted temporary capability of the terminal device. There may be two possible implementations as follows:

Manner 1: Only the first network device MN configures the filter information for the terminal device, the terminal device sends a UAI message to the first network device MN, and the first network device MN sends the UAI message to the second network device SN, where the UAI message includes the restricted temporary capability of the terminal device.

Manner 2: The first network device MN and the second network device SN separately configure the filter information for the terminal device, and the terminal device separately sends a UAI message to the first network device MN and the second network device SN, where the UAI message includes the restricted temporary capability of the terminal device.

It should be noted that, the MN and the SN negotiate with each other. If the foregoing possible manner 1 is used, only the first network device MN sends the final filter information to the terminal device. If the foregoing possible manner 2 is used, the first network device MN and the second network device SN separately send the final complete filter information to the terminal device. That is, content of the information sent by the first network device MN to the terminal device and content of the information sent by the second network device SN to the terminal device are the same.

According to the solution of this application, in an NR DC scenario, the MN and the SN may negotiate possible configurations, and the MN or the SN sets content of the filter information based on a possible configuration of the MN and a possible configuration of the SN, so that the content of the filter information is more accurate. Therefore, a range of the restricted temporary capability reported by the UE is more accurate, a configuration of the network device is optimized, and system performance is improved.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application. Any sequence arrangement in which a function of each step can be implemented should fall within the protection scope of this application.

It should be understood that the foregoing embodiments may be implemented separately, or may be implemented in combination based on functions and internal logic of steps in the foregoing embodiments.

For example, the method 200 in this application may be used in combination with the method 400 in this application. That is, the first network device and the second network device may perform both the steps in the method 200 and the steps in the method 400. In a possible embodiment, the first network device may be both a central unit CU and a master node MN. For the first network device and the second network device, in the steps in the method 400, the second network device sends the fourth information to the first network device, and the first network device and the second network device send the fifth information to the terminal device after determining the final filter information, where the fifth information may be the third information in the method 200. After performing the steps in the method 400, the first network device and the second network device may undertake to perform subsequent steps in the method 200. After the first network device receives the restricted capability sent by the terminal device based on the third information (or the fifth information), the first network device sends the first information to the second network device.

For another example, the method 300 in this application may be used in combination with the method 400 in this application. That is, the first network device and the second network device may perform both the steps in the method 300 and the steps in the method 400. Refer to the foregoing descriptions, and details are not described herein again.

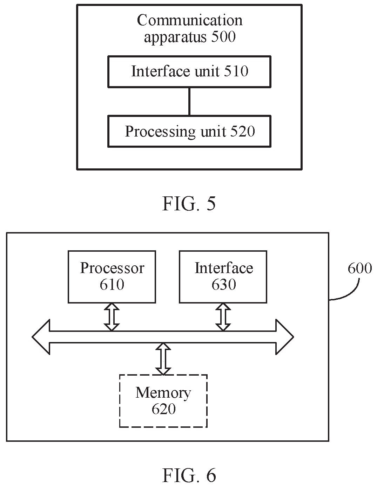

According to the foregoing methods, FIG. 5 is a diagram of a communication apparatus 500 according to an embodiment of this application.

As shown in FIG. 5, the apparatus 500 may include modules or units that are in one-to-one correspondence with the methods/operations/steps/actions described in the method 200, the method 300, and the method 400. The modules or the units may be hardware circuits, or may be software, or may be implemented by hardware circuits in combination with software. In a possible implementation, the apparatus may include an interface unit 510 and a processing unit 520.

In a possible design, the apparatus 500 may correspond to the first network device in the foregoing embodiments.

In a possible embodiment, the processing unit 520 in the communication apparatus 500 is configured to determine first information, where the first information indicates a candidate band and/or a candidate band combination, and the candidate band and/or the candidate band combination are/is used by a terminal device to report a restricted capability; and the interface unit 510 is configured to send the first information to a second network device. Alternatively, the processing unit 520 is configured to determine second information, where the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers; and the interface unit 510 is configured to send the second information to the second network device.

In a possible implementation, the interface unit 510 is further configured to: send third information to the terminal device, where the third information indicates that the terminal device is allowed to report the restricted capability; and receive the restricted capability sent by the terminal device, where the restricted capability is determined by the terminal device based on the third information.

In a possible implementation, the first information includes one or more candidate bands, or the first information includes one or more candidate band combinations.

In a possible implementation, the second information includes one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

In a possible implementation, the restricted capability includes at least one of the following: a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

In a possible implementation, the first information or the second information is carried in a UE CONTEXT MODIFICATION REQUEST message, or the first information or the second information is carried in a UE CONTEXT SETUP REQUEST message.

In a possible implementation, the first information or the second information is carried in a CG-ConfigInfo message.

In another possible embodiment, the interface unit 510 in the communication apparatus 500 is configured to receive fourth information sent by a second network device, where the fourth information indicates a first candidate band and/or a first candidate band combination, and the first candidate band and/or the first candidate band combination are/is used by a terminal device to report a restricted capability corresponding to the second network device; and the processing unit 520 is configured to determine fifth information based on the fourth information, where the fifth information indicates a second candidate band and/or a second candidate band combination, and the second candidate band and/or the second candidate band combination are/is used by the terminal device to report a restricted capability corresponding to the first network device and the restricted capability corresponding to the second network device; and the interface unit is further configured to send the fifth information to the terminal device.

In a possible implementation, the interface unit 510 is further configured to receive the restricted capabilities sent by the terminal device, where the restricted capabilities are determined by the terminal device based on the fifth information.

In a possible implementation, the fourth information includes one or more candidate bands, or the fourth information includes one or more candidate band combinations; and the fifth information includes one or more candidate bands, or the fifth information includes one or more candidate band combinations.

In a possible implementation, before the first network device receives the fourth information sent by the second network device, the interface unit 510 is further configured to send sixth information to the second network device, where the sixth information indicates a third candidate band and/or a third candidate band combination, and the third candidate band and/or the third candidate band combination are/is used by the terminal device to report the restricted capability corresponding to the first network device.

In a possible implementation, the sixth information includes one or more candidate bands, or the sixth information includes one or more candidate band combinations.

The interface unit 510 in the communication apparatus 500 performs receiving and sending operations performed by the first network device in the foregoing method embodiments, and the processing unit 520 performs operations other than the receiving and sending operations.

In a possible design, the apparatus 500 may correspond to the second network device in the foregoing embodiments.

In a possible embodiment, the interface unit 510 in the communication apparatus 500 is configured to receive first information sent by a first network device, where the first information indicates a candidate band and/or a candidate band combination, and the candidate band and/or the candidate band combination are/is used by a terminal device to report a restricted capability; or the interface unit 510 is configured to receive second information sent by the first network device, where the second information indicates one or both of a maximum quantity of multiple-input multiple-output MIMO layers and a maximum carrier bandwidth that correspond to the restricted capability, and the maximum quantity of MIMO layers includes one or both of a maximum quantity of uplink MIMO layers and a maximum quantity of downlink MIMO layers.

In a possible implementation, the first information includes one or more candidate bands, or the first information includes one or more candidate band combinations.

In a possible implementation, the second information includes one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

In a possible implementation, the restricted capability includes at least one of the following: a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

In a possible implementation, the first information or the second information is carried in a UE CONTEXT MODIFICATION REQUEST message, or the first information or the second information is carried in a UE CONTEXT SETUP REQUEST message.

In a possible implementation, the first information or the second information is carried in a CG-ConfigInfo message.

In another possible embodiment, the processing unit 520 in the communication apparatus 500 is configured to determine fourth information, where the fourth information indicates a first candidate band and/or a first candidate band combination, and the first candidate band and/or the first candidate band combination are/is used by a terminal device to report a restricted capability corresponding to the second network device; and the interface unit 510 is configured to send the fourth information to a first network device.

In a possible implementation, the fourth information includes one or more candidate bands, or the fourth information includes one or more candidate band combinations.

In a possible implementation, before the second network device determines the fourth information, the interface unit 510 is further configured to receive sixth information sent by the first network device, where the sixth information indicates a third candidate band and/or a third candidate band combination, and the third candidate band and/or the third candidate band combination are/is used by the terminal device to report a restricted capability corresponding to the first network device; and the processing unit 520 is further configured to determine the fourth information based on the sixth information.

In a possible implementation, the sixth information includes one or more candidate bands, or the sixth information includes one or more candidate band combinations.

The interface unit 510 in the communication apparatus 500 performs receiving and sending operations performed by the second network device in the foregoing method embodiments, and the processing unit 520 performs operations other than the receiving and sending operations.

In a possible design, the apparatus 500 may correspond to the terminal device in the foregoing embodiments.

In a possible embodiment, the interface unit 510 in the communication apparatus 500 is configured to receive third information sent by a first network device, where the third information indicates the terminal device to report a restricted capability; and the interface unit 510 is further configured to send the restricted capability to the first network device based on the third information, where the restricted capability includes a restricted candidate band and/or candidate band combination of the terminal device.

The interface unit 510 in the communication apparatus 500 performs receiving and sending operations performed by the terminal device in the foregoing method embodiments, and the processing unit 520 performs operations other than the receiving and sending operations.

According to the foregoing methods, FIG. 6 is a diagram of a communication apparatus 600 according to an embodiment of this application. As shown in FIG. 6, the apparatus 600 may be a first network device, a second network device, or a terminal device.

The apparatus 600 may include a processor 610 (that is, an example of a processing unit). In a possible implementation, the apparatus 600 further includes a memory 620. The memory 620 is configured to store instructions. The processor 610 is configured to execute the instructions stored in the memory 620, to cause the apparatus 600 to implement the steps performed by the first network device, the second network device, or the terminal device in the method 200, the method 300, or the method 400.

In a possible implementation, the apparatus 600 may further include an interface 630 (that is, an example of an interface unit module). Further, the processor 610, the memory 620, and the interface 630 may communicate with each other through an internal connection path, to transfer a control signal and/or a data signal. The memory 620 is configured to store a computer program. The processor 610 may be configured to invoke the computer program from the memory 620 and run the computer program, to control the interface 630 to receive a signal or send a signal, and complete the steps of the first network device, the second network device, or the terminal device in the foregoing method. The memory 620 may be integrated into the processor 610, or may be separated from the processor 610.

In a possible implementation, if the communication apparatus 600 is a communication device, the interface 630 is a receiver or a transmitter. The receiver and the transmitter may be a same physical entity or different physical entities. When the receiver and the transmitter are a same physical entity, the receiver and the transmitter may be collectively referred to as a transceiver.

In a possible implementation, if the communication apparatus 600 is a chip or a circuit, the interface 630 is an input interface, or the interface 630 is an output interface.

In an implementation, it may be considered that a function of the interface 630 is implemented by using a transceiver circuit or a dedicated transceiver chip. It may be considered that the processor 610 is implemented by using a dedicated processing chip, a processing circuit, a processor, or a general-purpose chip.

In another implementation, it may be considered that the communication apparatus provided in this embodiment of this application is implemented by using a general-purpose computer. That is, program code for implementing functions of the processor 610 and the interface 630 is stored in the memory 620, and a general-purpose processor implements the functions of the processor 610 and the interface 630 by executing the code in the memory 620.

For concepts, explanations, detailed descriptions, and other steps of the apparatus 600 that are related to the technical solutions provided in embodiments of this application, refer to the descriptions of the content in the foregoing method or other embodiments. Details are not described herein again.

An embodiment of this application further provides a computer-readable storage medium. The computer-readable storage medium stores computer instructions for implementing the method performed by the first network device, the second network device, or the terminal device in the foregoing method embodiments.

For example, when the computer program is executed by a computer, the computer is caused to implement the method performed by the first network device, the second network device, or the terminal device in the foregoing method embodiments.

An embodiment of this application further provides a computer program product including instructions. When the instructions are executed by a computer, the computer is caused to implement the method performed by the first network device, the second network device, or the terminal device in the foregoing method embodiments.

An embodiment of this application further provides a communication system. The communication system includes the first network device, the second network device, and the terminal device in the foregoing embodiments.

For explanations and beneficial effect of related content in any one of the apparatuses provided above, refer to the corresponding method embodiment provided above. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions or computer programs. When the computer instructions or the computer programs are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally represents an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the system, apparatus, and unit described above, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units may be integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first network device, first information to a second network device, wherein the first information indicates a candidate band and/or a candidate band combination, and the candidate band and/or the candidate band combination are/is used by a terminal device to report a restricted capability; or
sending, by the first network device, second information to the second network device, wherein the second information indicates one or both of a maximum quantity of multiple-input multiple-output MIMO layers and a maximum carrier bandwidth that correspond to the restricted capability, and the maximum quantity of MIMO layers comprises one or both of a maximum quantity of uplink MIMO layers and a maximum quantity of downlink MIMO layers.

2. The method according to claim 1, wherein the method further comprises:
sending, by the first network device, third information to the terminal device, wherein the third information indicates that the terminal device is allowed to report the restricted capability; and
receiving, by the first network device, the restricted capability sent by the terminal device, wherein the restricted capability is determined by the terminal device based on the third information.

3. The method according to claim 1 or 2, wherein the first information comprises one or more candidate bands, or the first information comprises one or more candidate band combinations.

4. The method according to claim 1 or 2, wherein the second information comprises one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

5. The method according to any one of claims 1 to 4, wherein the restricted capability comprises at least one of the following:
a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

6. The method according to any one of claims 1 to 5, wherein
the first network device is a central unit, and the second network device is a distributed unit; or
the first network device is a master node, and the second network device is a secondary node.

7. The method according to claim 6, wherein the first network device is a central unit, the second network device is a distributed unit, and the first information or the second information is carried in a UE CONTEXT MODIFICATION REQUEST message, or the first information or the second information is carried in a UE CONTEXT SETUP REQUEST message.

8. The method according to claim 6, wherein the first network device is a master node, the second network device is a secondary node, and the first information or the second information is carried in a CG-ConfigInfo message.

9. A communication method, comprising:
receiving, by a second network device, first information sent by a first network device, wherein the first information indicates a candidate band and/or a candidate band combination, and the candidate band and/or the candidate band combination are/is used by a terminal device to report a restricted capability; or
receiving, by the second network device, second information sent by the first network device, wherein the second information indicates one or both of a maximum quantity of multiple-input multiple-output MIMO layers and a maximum carrier bandwidth that correspond to the restricted capability, and the maximum quantity of MIMO layers comprises one or both of a maximum quantity of uplink MIMO layers and a maximum quantity of downlink MIMO layers.

10. The method according to claim 9, wherein the first information comprises one or more candidate bands, or the first information comprises one or more candidate band combinations.

11. The method according to claim 9, wherein
the second information comprises one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

12. The method according to any one of claims 9 to 11, wherein the restricted capability comprises at least one of the following:
a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

13. The method according to any one of claims 9 to 12, wherein
the first network device is a central unit, and the second network device is a distributed unit; or
the first network device is a master node, and the second network device is a secondary node.

14. The method according to claim 13, wherein the first network device is a central unit, the second network device is a distributed unit, and the first information or the second information is carried in a UE CONTEXT MODIFICATION REQUEST message, or the first information or the second information is carried in a UE CONTEXT SETUP REQUEST message.

15. The method according to claim 13, wherein the first network device is a master node, the second network device is a secondary node, and the first information or the second information is carried in a CG-ConfigInfo message.

16. A communication method, comprising:
receiving, by a first network device, fourth information sent by a second network device, wherein the fourth information indicates a first candidate band and/or a first candidate band combination, and the first candidate band and/or the first candidate band combination are/is used by a terminal device to report a restricted capability corresponding to the second network device;
determining, by the first network device, fifth information based on the fourth information, wherein the fifth information indicates a second candidate band and/or a second candidate band combination, and the second candidate band and/or the second candidate band combination are/is used by the terminal device to report a restricted capability corresponding to the first network device and the restricted capability corresponding to the second network device; and
sending, by the first network device, the fifth information to the terminal device.

17. The method according to claim 16, wherein the method further comprises:
receiving, by the first network device, the restricted capabilities sent by the terminal device, wherein the restricted capabilities are determined by the terminal device based on the fifth information.

18. The method according to claim 16 or 17, wherein
the fourth information comprises one or more candidate bands, or the fourth information comprises one or more candidate band combinations; and
the fifth information comprises one or more candidate bands, or the fifth information comprises one or more candidate band combinations.

19. The method according to any one of claims 16 to 18, wherein before the receiving, by the first network device, the fourth information sent by the second network device, the method further comprises:
sending, by the first network device, sixth information to the second network device, wherein the sixth information indicates a third candidate band and/or a third candidate band combination, and the third candidate band and/or the third candidate band combination are/is used by the terminal device to report the restricted capability corresponding to the first network device.

20. The method according to any one of claims 16 to 19, wherein the sixth information comprises one or more candidate bands, or the sixth information comprises one or more candidate band combinations.

21. The method according to any one of claims 16 to 20, wherein the first network device is a master node, and the second network device is a secondary node.

22. A communication method, comprising:
determining, by a second network device, fourth information, wherein the fourth information indicates a first candidate band and/or a first candidate band combination, and the first candidate band and/or the first candidate band combination are/is used by a terminal device to report a restricted capability corresponding to the second network device; and
sending, by the second network device, the fourth information to a first network device.

23. The method according to claim 22, wherein
the fourth information comprises one or more candidate bands, or the fourth information comprises one or more candidate band combinations.

24. The method according to claim 22 or 23, wherein before the determining, by the second network device, the fourth information, the method further comprises:
receiving, by the second network device, sixth information sent by the first network device, wherein the sixth information indicates a third candidate band and/or a third candidate band combination, and the third candidate band and/or the third candidate band combination are/is used by the terminal device to report a restricted capability corresponding to the first network device; and
determining, by the second network device, the fourth information based on the sixth information.

25. The method according to claim 24, wherein the sixth information comprises one or more candidate bands, or the sixth information comprises one or more candidate band combinations.

26. The method according to any one of claims 22 to 25, wherein the first network device is a master node, and the second network device is a secondary node.

27. A communication apparatus, comprising:
an interface unit, configured to: send first information to a second network device, wherein the first information indicates a candidate band and/or a candidate band combination, and the candidate band and/or the candidate band combination are/is used by a terminal device to report a restricted capability; or
send second information to the second network device, wherein the second information indicates one or both of a maximum quantity of multiple-input multiple-output MIMO layers and a maximum carrier bandwidth that correspond to the restricted capability, and the maximum quantity of MIMO layers comprises one or both of a maximum quantity of uplink MIMO layers and a maximum quantity of downlink MIMO layers.

28. The apparatus according to claim 27, wherein the interface unit is further configured to:
send third information to the terminal device, wherein the third information indicates that the terminal device is allowed to report the restricted capability; and
receive the restricted capability sent by the terminal device, wherein the restricted capability is determined by the terminal device based on the third information.

29. The apparatus according to claim 27 or 28, wherein the first information comprises one or more candidate bands, or the first information comprises one or more candidate band combinations.

30. The apparatus according to claim 27 or 28, wherein the second information comprises one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

31. The apparatus according to any one of claims 27 to 30, wherein the restricted capability comprises at least one of the following:
a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

32. The apparatus according to any one of claims 27 to 31, wherein
the apparatus is a central unit, and the second network device is a distributed unit; or
the apparatus is a master node, and the second network device is a secondary node.

33. The apparatus according to claim 32, wherein the apparatus is a central unit, the second network device is a distributed unit, and the first information or the second information is carried in a UE CONTEXT MODIFICATION REQUEST message, or the first information or the second information is carried in a UE CONTEXT SETUP REQUEST message.

34. The apparatus according to claim 32, wherein the apparatus is a master node, the second network device is a secondary node, and the first information or the second information is carried in a CG-ConfigInfo message.

35. A communication apparatus, comprising:
an interface unit, configured to: receive first information sent by a first network device, wherein the first information indicates a candidate band and/or a candidate band combination, and the candidate band and/or the candidate band combination are/is used by a terminal device to report a restricted capability; or
receive second information sent by the first network device, wherein the second information indicates one or both of a maximum quantity of multiple-input multiple-output MIMO layers and a maximum carrier bandwidth that correspond to the restricted capability, and the maximum quantity of MIMO layers comprises one or both of a maximum quantity of uplink MIMO layers and a maximum quantity of downlink MIMO layers.

36. The apparatus according to claim 35, wherein the first information comprises one or more candidate bands, or the first information comprises one or more candidate band combinations.

37. The apparatus according to claim 35, wherein
the second information comprises one or more restricted maximum quantities of MIMO layers and/or one or more restricted maximum carrier bandwidths, the one or more restricted maximum quantities of MIMO layers are in one-to-one correspondence with one or more serving cells of the terminal device, and the one or more restricted maximum carrier bandwidths are in one-to-one correspondence with the one or more serving cells of the terminal device.

38. The apparatus according to any one of claims 35 to 37, wherein the restricted capability comprises at least one of the following:
a forbidden band, a forbidden band combination, a restricted band, a restricted band combination, a restricted maximum quantity of MIMO layers corresponding to the restricted band, a restricted maximum quantity of MIMO layers corresponding to the restricted band combination, a restricted maximum quantity of MIMO layers corresponding to a band in the restricted band combination, a restricted maximum carrier bandwidth corresponding to the restricted band, a restricted maximum carrier bandwidth corresponding to the restricted band combination, and a restricted maximum carrier bandwidth corresponding to a band in the restricted band combination.

39. The apparatus according to any one of claims 35 to 37, wherein
the first network device is a central unit, and the apparatus is a distributed unit; or
the first network device is a master node, and the apparatus is a secondary node.

40. The apparatus according to claim 39, wherein the first network device is a central unit, the apparatus is a distributed unit, and the first information or the second information is carried in a UE CONTEXT MODIFICATION REQUEST message, or the first information or the second information is carried in a UE CONTEXT SETUP REQUEST message.

41. The apparatus according to claim 39, wherein the first network device is a master node, the apparatus is a secondary node, and the first information or the second information is carried in a CG-ConfigInfo message.

42. A communication apparatus, comprising:
an interface unit, configured to receive fourth information sent by a second network device, wherein the fourth information indicates a first candidate band and/or a first candidate band combination, and the first candidate band and/or the first candidate band combination are/is used by a terminal device to report a restricted capability corresponding to the second network device; and
a processing unit, configured to determine fifth information based on the fourth information, wherein the fifth information indicates a second candidate band and/or a second candidate band combination, and the second candidate band and/or the second candidate band combination are/is used by the terminal device to report a restricted capability corresponding to the apparatus and the restricted capability corresponding to the second network device; and
the interface unit is further configured to send the fifth information to the terminal device.

43. The apparatus according to claim 42, wherein the interface unit is further configured to receive the restricted capabilities sent by the terminal device, wherein the restricted capabilities are determined by the terminal device based on the fifth information.

44. The apparatus according to claim 42 or 43, wherein
the fourth information comprises one or more candidate bands, or the fourth information comprises one or more candidate band combinations; and
the fifth information comprises one or more candidate bands, or the fifth information comprises one or more candidate band combinations.

45. The apparatus according to any one of claims 42 to 44, wherein before the interface unit receives the fourth information sent by the second network device,
the interface unit is further configured to send sixth information to the second network device, wherein the sixth information indicates a third candidate band and/or a third candidate band combination, and the third candidate band and/or the third candidate band combination are/is used by the terminal device to report the restricted capability corresponding to the apparatus.

46. The apparatus according to any one of claims 42 to 45, wherein the sixth information comprises one or more candidate bands, or the sixth information comprises one or more candidate band combinations.

47. The apparatus according to any one of claims 42 to 45, wherein the apparatus is a master node, and the second network device is a secondary node.

48. A communication apparatus, comprising:
a processing unit, configured to determine fourth information, wherein the fourth information indicates a first candidate band and/or a first candidate band combination, and the first candidate band and/or the first candidate band combination are/is used by a terminal device to report a restricted capability corresponding to the apparatus; and
an interface unit, configured to send the fourth information to a first network device.

49. The apparatus according to claim 48, wherein
the fourth information comprises one or more candidate bands, or the fourth information comprises one or more candidate band combinations.

50. The apparatus according to claim 48 or 49, wherein before the processing unit determines the fourth information, the interface unit is further configured to receive sixth information sent by the first network device, wherein the sixth information indicates a third candidate band and/or a third candidate band combination, and the third candidate band and/or the third candidate band combination is used by the terminal device to report a restricted capability corresponding to the first network device; and
the processing unit determines the fourth information based on the sixth information.

51. The apparatus according to claim 50, wherein the sixth information comprises one or more candidate bands, or the sixth information comprises one or more candidate band combinations.

52. The apparatus according to any one of claims 48 to 51, wherein the first network device is a master node, and the apparatus is a secondary node.

53. A communication apparatus, comprising:
a processor, wherein the processor is configured to execute a program or instructions, to cause the apparatus to perform the method according to any one of claims 1 to 8, cause the apparatus to perform the method according to any one of claims 9 to 15, cause the apparatus to perform the method according to any one of claims 16 to 21, or cause the apparatus to perform the method according to any one of claims 22 to 26.

54. A computer-readable storage medium, wherein the computer-readable storage medium stores a computer program; and when the computer program is run on a computer, the computer is caused to perform the method according to any one of claims 1 to 8, the method according to any one of claims 9 to 15, the method according to any one of claims 16 to 21, or the method according to any one of claims 22 to 26.

55. A computer program product, comprising computer program code, wherein when the computer program code is run, the method according to any one of claims 1 to 8, the method according to any one of claims 9 to 15, the method according to any one of claims 16 to 21, or the method according to any one of claims 22 to 26 is implemented.
